# EUROPEAN PATENT APPLICATION

(11) **EP 2 733 989 A1**
(43) Date of publication of application: **21.05.2014**
(21) Application number: 12193302.2
(22) Date of filing: 20.11.2012
(51) Int. Cl.: H04W 40/02, H04L 12/707, H04L 12/741, H04L 12/721

(54) **Routing protocol for heterogeneous communication networks**

(71) Applicant: ABB Research Ltd., 8050 Zürich (CH)
(72) Inventor: Pignolet, Yvonne-Anne, 8037 Zürich (CH); Dzung, Dacfey, 5430 Wettingen (CH); Rinis, Ilias, 8044 Zürich (CH)
(74) Representative: ABB Patent Attorneys

(57) **Abstract**

The present invention is concerned with routing packets in a packet communication network including a first device (A) and a second device (B), wherein the two devices have first and second interfaces (0, 1) for accessing respectively a first and a second communication link, wherein the two links have distinct values of a respective link metric. The invention comprises assigning to the two interfaces of each device distinct IPv6 link-local addresses and a shared global IP address, and executing a routing protocol based on the assigned addresses. The invention facilitates routing in heterogeneous networks by enabling the networking layer to handle multiple communication interfaces of a given device as multiple nodes for routing in the network. Optimum routing decisions are reached which take into consideration the state of a link for each interface and that ultimately identify optimum paths across multiple link-layer technologies.

## Description

### FIELD OF THE INVENTION

The invention relates to routing protocols for packet oriented communication networks and specifically to heterogeneous communication networks with distinct link-layer technologies connecting a pair of neighbouring devices.

### BACKGROUND OF THE INVENTION

In packet communication networks, a data packet is routed from source to destination along a certain path consisting of a number of hops, wherein a hop corresponds to a link between neighboring routers. The paths are set up and maintained by a routing protocol based on link metrics describing properties of the connection between neighboring nodes. Routing protocols typically maintain a routing table with entries for addresses or prefixes and the next hop to take in order to reach a destination efficiently.

Conventional routing protocols have been designed to work well for a single communication technology, i.e. for a single link layer technology involving one of copper wires, optical fibers, wireless communication, or power line communication, and assume that different devices are connected directly by at most one interface, with any possible further path including two hops or more. In contrast thereto, suitable routing protocols for heterogeneous networks using several link layer technologies in a redundant or parallel manner and with two devices being one-hop connected via two different interfaces are still missing.

In order to leverage the existence of multiple technologies between two devices for the purpose of achieving increased availability and robustness, a routing protocol has to solve the problem of addressing multiple interfaces (where each "interface" supports one communication technology such as copper wires, optical fibers, wireless, or power line communication), maintaining and exchanging information regarding the involved links and the decision making process when forwarding packets.

A typical routing protocol sends unicast and multicast control messages to add and update routing information. The IPv6 routing protocol named RPL (proposed standard RFC 6550) satisfies the constraints and needs of Low Power and Lossy Networks. RPL is discussed in an article by T. Clausen et al. entitled "A critical evaluation of the IPv6 Routing Protocol for Low Power and Lossy Networks (RPL)", IEEE 7th International Conference on Wireless and Mobile Computing, Networking and Communications (WiMob), 10.-12. October 2011. RPL is a self-healing Distance Vector IPv6 routing protocol that builds Destination Oriented Directed Acyclic Graphs (DODAGs), using an objective function and a set of link metrics and constraints. While this protocol does allow defining different link metrics for different link layer technologies, the protocol is not concerned with the handling of the different metrics or technologies on a specific layer of the seven-layer OSI model of computer networking. A device combining power line and wireless communication technology is described in an article by Sun et al. entitled "Demo: Achieving robust sensor networks through close coordination between narrow-band power line and low-power wireless communications", Proc. 9th ACM Conference on Embedded Networked Sensor Systems, 2011. In this device, the decision which technology to use is taken on the MAC layer or data link layer, that is on OSI Layer 2.

In the seven-layer OSI model of computer networking, OSI Layer 3 is termed network layer. The network layer is responsible for packet forwarding including routing through intermediate routers. The network layer provides the functional and procedural means of transferring variable length data sequences from a source to a destination host via one or more networks while maintaining the quality of service functions.

### DESCRIPTION OF THE INVENTION

It is therefore an objective of the invention to enable efficient and automated routing in heterogeneous communication networks with distinct link-layer technologies connecting a pair of neighbouring devices. This objective is achieved by a method of and a device for routing packets in a packet communication network according to the independent claims. Preferred embodiments are evident from the dependent patent claims.

According to the invention, a packet based communication network includes a first device and a second device, wherein the two devices both have a first and a second interface with a unique MAC address for accessing respectively a first and a second one-hop communication link between the two devices, with the two links having distinct values of a respective link metric or quality such that a routing protocol may determine an unambiguously preferred link. Routing of packets in this heterogeneous network comprises the steps of
- assigning to the two interfaces of each device distinct IPv6 link-local addresses for single hop, non-routed transmission of control messages, and a shared global IP address, and
- executing an OSI Layer 3 routing protocol, specifically IPv6 RPL, based on the assigned addresses and thereby treating the two interfaces of neighboring device as separate nodes in the routing procedure, to produce source-destination routing information.

The invention facilitates routing in heterogeneous networks by enabling the networking layer to handle multiple communication interfaces of a given device as multiple nodes for routing in the network. Optimum routing decisions are reached which take into consideration the state of a link for each interface and that ultimately identify optimum paths across multiple link-layer technologies, in a way transparent for upper layers. Hence the invention achieves routing robustness by exploiting link redundancy. In addition the invention is fully interoperable with stateless auto-configuration and devices with one interface only.

In a preferred variant of the invention, the two communication links do not share the same link-layer technology, i.e. the two links involve mutually distinct technologies of a set of link-layer technologies based on copper wires, optical fibers, wireless transmission, or power line communication. Accordingly, in the broadest context of the present invention, the reference to distinct values of respective link metrics is to be understood as involving distinct interfaces, rather than distinct technologies. In other words, two interfaces accessing the same medium, such as two wireless antennas on the same device, tuned either to the same frequency or to different frequencies, or a device with two PLC interfaces coupled to two sides of a switching primary device in a substation likewise benefit from the invention.

In a preferred variant of the invention, with each of the interfaces of a device having its own unique MAC or link layer address, the design of the routing solution assigns a separate link-local IPv6 address to each interface which is derived from the corresponding MAC address, or from an Extended Unique Identifier (EUI), of the interface. In case one of the interfaces is configured to be the default interface, the single global IP address of the device is derived from the default interface. A device will then treat all available interfaces of neighbouring devices as separate neighbours and make routing decisions taking the different interfaces into account.

In an advantageous embodiment of the invention, a data structure including a Neighbour Cache is maintained for, and preferably at, each device. The Neighbour Cache matches, or relates, each IPv6 link-local address of the one-hop reachable neighbours of the device to one of the local interfaces of the device as well as to the corresponding MAC or link-layer address of the neighbour. The data structure may further include a Routing Table indicative of the presently preferred next-hop link-local IPv6 address per destination device.

The present invention also relates to a device for routing or transmitting packets in a packet communication network, including a first and a second interface for accessing a one-hop connected second or neighbour device via respectively a first and a second communication link. The two communication links have distinct values of a respective link metric, and the device is adapted to
- assign, or have assigned, to the two interfaces of the device distinct IPv6 link-local addresses and a shared global IP address, and to
- execute, or participate in, a routing protocol based on the assigned addresses.

### BRIEF DESCRIPTION OF THE DRAWINGS

The subject matter of the invention will be explained in more detail in the following text with reference to preferred exemplary embodiments which are illustrated in the attached drawings, in which:

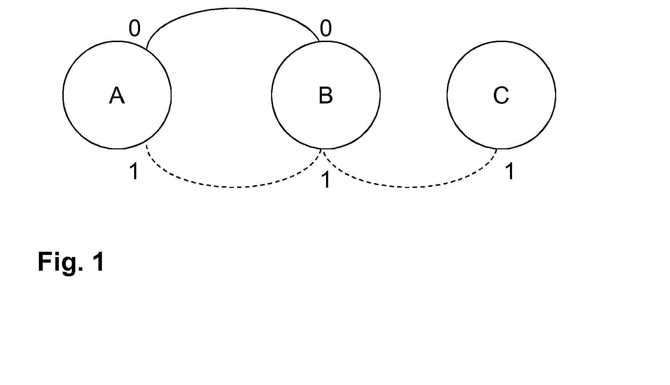

Fig.1 schematically depicts three devices interconnected via two distinct technologies.

### DETAILED DESCRIPTION OF PREFERRED EMBODIMENTS

Fig.1 depicts three devices A, B, and C, of which devices A and B each have two communication interfaces 0, 1 (e.g., wireless transmission and Power Line Communication PLC) and a default interface 0. The two devices A, B both have a first and a second interface with a unique MAC address each (MAC A0, MAC A1; MAC B0, MAC B1) for accessing respectively a first and a second one-hop communication link between the two devices. Devices A and B can communicate over both interfaces (i.e. A0 is connected with B0 and vice versa (solid line), and A1 is connected with B1 and vice versa (broken line)), wherein the two links involve distinct link layer technologies. On the other hand, device C is only connected to device B via a single link-layer technology and interface 1.

The invention facilitates routing for heterogeneous networks by enabling all communication interfaces of a device to participate in the routing procedure. It takes care of issues arising in address resolution and routing table maintenance of several interfaces. To this end apart from a default route and a default interface of a device the following IPv6 data structures are maintained (see Tables 1 to 3 in the example further below).
1. Neighbour Cache for storing information that relates, or matches, a link-local IP address (IP_LL_B0) of each of the one-hop reachable neighbours to one of the local interfaces (0, 1) of the device and to the MAC or Link Layer address (MAC B0) of the neighbour that corresponds to the link-local IP address (IP_LL_B0). In addition the values of a corresponding link metric such as an expected transmission count ETX may be stored in this location.
2. Routing Table for storing information that matches a global IP address or prefix of a destination to a next-hop link-local IP address of a neighbour and to the interface to be used. The interface and next-hop link-local IP address are determined by an objective function that may evaluate the before-mentioned entries in the Neighbour Cache of the device.

Each device chooses a global IP address and assigns link local IPv6 addresses to its interfaces, e.g. as described in stateless auto-configuration RFC 4862. The latter stipulates that a link-local address is formed by combining the link-local prefix FE80::0 of appropriate length with a modified EUI-64 (64 bit extended unique identifier) most commonly derived from the MAC address. Global addresses are then formed by appending the same interface identifier to a prefix of appropriate length and e.g. distributed previously with the Prefix Option in ICMP information objects (IO).

Internet Control Message Protocol (ICMP) routing control messages consist of information solicitations (IS), information objects (IO) and advertisement objects (AOs). The respective control messages of the routing protocol RPL are DIS, DIO and DAO messages. Control messages of the routing and neighbour discovery protocol are sent to unicast or multicast destinations and have the (one-hop) scope of a link, with the only exception being advertisement objects (e.g., DAOs) and their acknowledgement messages using global addresses for both the source and the destination addresses. According to the invention multicast control messages are sent over all available interfaces of a device using the IPv6 link-local address of the respective interface as the source address. These IPv6 link-local addresses have the scope of a single hop, i.e. they are intended only for communication within a segment of a local network. Accordingly, routers do not forward packets with link-local addresses. On the other hand, data packets carrying operational payload data are sent using the global, routable IP address of the source device.

Unicast messages however are either solicited, or pertain to a certain link-local address and are sent only over the interface that this address belongs to. Thus unicast messages may have a global IP address as the source address, with the source MAC address still coding the interface used.

New entries of link-local addresses are added to the neighbor cache upon the reception of any messages such as unicast/multicast IS, IO or unicast AO messages. The link metrics for each neighbor cache entry is updated with each incoming / outgoing (depending on the metric) IP packet, not only based on ICMP messages. To avoid duplicate entries due to multicast messages with the same link local source address received by different interfaces a check is performed before adding a new entry. If there already is an entry with the same link local neighbor address received over a different interface it is only overwritten if the link metrics of the new entry are better. This case may occur if the device has two interfaces accessing the same medium (e.g. two wireless antennas tuned to the same frequency and placed in different locations, or two PLC interfaces coupled to two sides of a switching device). In contrast to the neighbor cache update, routing table entries stem from the content (options) of unicast AO messages only, e.g., from a DAO. Since AOs are unicast only one interface will process them and hence there is at most one entry in all the routing tables of the interfaces per prefix contained in an AO.

For all addresses that do not appear in the neighbor cache or in the routing table of any interface, a default route described by a link local next hop address (and hence a unique interface) is used.

Consequently the decision of the default route is crucial for the efficiency and performance of the routing protocol. Based on the information contained in the neighbor cache of all interfaces, this decision can take the different channel conditions into account to compute a suitable solution. E.g., in RPL each device collects a set of candidate parents (neighbors that might serve as the next hop on the default route) among the entries in its neighbor caches exploiting the corresponding link metrics. Using the invention, this set can now include several entries for the same device, differing by their interface. Each potential parent has link metric values assigned to it. To choose the preferred parent all candidate parents are taken into account with the objective function based on the link metrics. The chosen preferred parent determines then the default route (the default link local next hop).

When an IPv6 packet is to be forwarded, it must hold that the destination address is global, otherwise the sender of the packet could have reached the destination directly (only neighbors know link-local addresses). Hence the routing table of each interface is searched to find the next hop neighbor (unique because of unicast nature of the corresponding AO message), of which the neighbor cache information is then used for forwarding. If the address cannot be found in the data structures then the default route is used.

In an exemplary scenario based on the communication system of Fig.1 and incorporating the invention with the routing protocol RPL, based on RPL control messages and neighbor discovery messages, A will observe two link-local neighbors, B0 and B1, that will be handled independently even though they include the same physical device.

Assuming that A is a DODAG root sending DIOs periodically and that B and C sent DAOs to their preferred parents. Hence the data structures of the devices contain the entries (ignoring prefixes) depicted in the following tables if the link between A and B over interface 1 (dashed line) is worse than over interface 0 (continuous line). IP_LL_XY denotes the link local IPv6 address derived from the MAC address of interface Y of device X. IP_G_XY denotes the global IP address derived by the MAC address of interface Y of device X.

**Table 1- The data structure of device A of the example. Both routes are via interface 0.**

| **Device A** | | **local interface** | **ETX** |
|---|---|---|---|
| Neighbor Cache | IP_LL_80 → MAC_B0 | 0 | 2 |
| | IP_LL_B1→MAC_B1 | 1 | 3 |
| Routing Table | IP_G_B0 → IP_LL_B0 | 0 | |
| | IP_G_C1 → IP_LL_B0 | 0 | |
| RPL Potential Parents | | | |

**Table 2 - The data structures of device B of the example. The two routes in the table have different next hop entries.**

| **Device B** | | **local interface** | **ETX** |
|---|---|---|---|
| Neighbor Cache | IP_LL_A0 → MAC_A0 | 0 | 4 |
| | IP_LL_C1 → MAC_C1 | 1 | 6 |
| | IP_LL_A1 → MAC_A1 | 1 | 5 |
| Routing Table | IP_G_A0 → IP_LL_A0 | 0 | |
| | IP_G_C1 → IP_LL_C1 | 1 | |
| RPL Potential Parents | IP_LL_A0, IP_LL_A1, IP_LL_C1 | | |
| Default route | IP_LL_A0 | | |

**Table 3 - The data structures of device C of the example. No advertisements reached C, thus if it needs to send a packet to device A, it will take the default route to device B via interface 0. At B a routing table entry for A is found and the default interface is used.**

| **Device C** | | **local interface** | **ETX** |
|---|---|---|---|
| Neighbor Cache | IP_LL_B1 → MAC_B1 | 0 | 4 |
| Routing Table | | | |
| RPL Potential Parents | IP_LL_B1 | | |
| Default route | IP_LL_B1 | | |

While the above description is given in terms of IPv6 routing using ICMP messages as the most likely embodiment, the principle of the invention is however also applicable to non-IP networks such as ZigBee-2008 or Wireless HART. Furthermore, instead of having one set of data structures for all interfaces, the data structures could be separated such that there is a dedicated routing table and Neighbour Cache for each interface.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of routing packets in a packet communication network including a first device (A) and a second device (B), wherein the two devices have first and second interfaces (0, 1) for accessing respectively a first and a second communication link, wherein the two links have distinct values of a respective link metric, comprising
- assigning to the two interfaces of each device distinct IPv6 link-local addresses and a shared global IP address, and
- executing a routing protocol based on the assigned addresses.

2. The method of claim 1, wherein the first communication link involves a link layer technology that is different from a link layer technology involved by the second communication link.

3. The method of claim 1, comprising
- deriving the IPv6 link-local address to be assigned to an interface of a device from a MAC address of the interface, and
- deriving the global IP address from a default interface of the device.

4. The method of claim 1, comprising
- maintaining, for the first device, a neighbour cache matching an IPv6 link-local address of the second device to an interface of the first device and to a corresponding MAC address of the second device.

5. The method of claim 1, comprising
- sending multicast control messages over both interfaces, each control message having the IPv6 link-local address of the interface as source address.

6. A device (A) for transmitting packets in a packet communication network, including a first and a second interface (0, 1) for accessing respectively a first and a second communication link to a second device (B), wherein the two communication links have distinct values of a respective link metric, adapted to
- assign to the two interfaces of the device distinct IPv6 link-local addresses and a shared global IP address, and
- execute a routing protocol based on the assigned addresses.
